# EUROPÄISCHE PATENTSCHRIFT

(11) **EP 1 347 907 B1**
(45) Veröffentlichungstag und Bekanntmachung des Hinweises auf die Patenterteilung: **08.06.2005**
(21) Anmeldenummer: 01985890.1
(22) Anmeldetag: 17.12.2001
(51) Int. Cl.: B60T 8/36

(54) **VENTILANORDNUNG, INSBESONDERE FÜR SCHLUPFGEREGELTE KRAFTFAHRZEUG-BREMSANLAGEN**
VALVE MECHANISM, ESPECIALLY FOR AN ANTI-SKID AUTOMOTIVE BRAKE SYSTEMS
ENSEMBLE DE SOUPAPE, DESTINE EN PARTICULIER A DES SYSTEMES DE FREINAGE A ANTIPATINAGE POUR VEHICULES AUTOMOBILES

(30) Priorität: 27.12.2000 DE 10065235; 31.01.2001 DE 10104241
(43) Veröffentlichungstag der Anmeldung: 01.10.2003
(73) Patentinhaber: Continental Teves AG & Co. oHG, 60488 Frankfurt (DE)
(72) Erfinder: OBERSTEINER, Georg, 65510 Idstein (DE); LAUER, Josef, 66620 Nonnweiler (DE)
(86) Internationale Anmeldenummer: PCT/EP2001/014875
(87) Internationale Veröffentlichungsnummer: WO 2002/051683

(56) Entgegenhaltungen:
- EP-A- 0 673 815
- DE-A- 3 233 268
- DE-A- 4 230 393
- DE-A- 19 537 659
- DE-A- 19 710 353

## Beschreibung

Die Erfindung betrifft eine Ventilanordnung, insbesondere für schlupfgeregelte Kraftfahrzeug-Bremsanlagen, nach dem Oberbegriff des Patentanspruchs 1.

Aus der DE 42 30 393 A1 ist bereits eine Ventilanordnung bekannt geworden, bestehend aus einer Parallelschaltung eines Kugelrückschlagventils zu einem weiteren elektromagnetisch ansteuerbaren Ventilschließglied. Diese Ventilanordnung hat den Nachteil, dass durch die gewählte Konstruktion ein hoher Staudruck und ein die Durchflussrate begrenzender Strömungsquerschnitt im Bereich des Kugelrückschlagventils wirksam ist. Ferner befindet sich das Kugelrückschlagventil im Bereich von Gehäusekanten, die unter Umständen,gleichfalls einen unerwünschten Einfluss auf das Strömungsverhalten und auf die Betriebssicherheit des Kugelrückschlagventils nehmen. Die Konstruktion greift auf überwiegend massive, aufwendig herzustellende Gehäuseteile zurück.

Ferner ist aus der gattungsbildenden EP-A-0 673 815 eine Ventilanordnung bekannt, die ein als Stanzteil ausgeführtes Halteteil aufweist, das ein erstes Ventilschließglied in einem Ventilaufnahmekörper führt. Das Ventilschließglied befindet sich allseitig umgeben von tief heruntergezogenen Gehäusekanten in einem außermittigen Druckmitteldurchlass des Ventilaufnahmekörpers, der in mittiger Lage einen weiteren Druckmitteldurchlass mit konstantem Öffnungsquerschnitt aufnimmt, welcher sich bis zu einer in Richtung des Halteteils tief heruntergezogene Stirnfläche des Ventilaufnahmekörpers erstreckt, so dass sowohl durch den Vorsprung des mittig angeordneten Druckmitteldurchlasses als auch durch den Axialabstand zwischen den beiden Druckmitteldurchlässe im Öffnungsbereich der Druckmitteldurchlässe eine Beeinträchtigung des Strömungsverhaltens nicht ausgeschlossen werden kann.

Die DE-A-32 33 268 offenbart ein Hydraulikventil, mit einer Ventilpatrone, in der eine Ventilkugel gelagert ist, die mittels einer an einem Flachsieb angebrachten Federzunge gegen einen Ventilsitz in der Ventilpatrone gedrückt ist. Die Ventilkugel befindet sich in einem außermittigen Druckmitteldurchlass der Ventilpatrone, die in einem Axialabstand zum außermittigen Druckmitteldurchlass einen weiteren, mit konstantem Öffnungsquerschnitt versehenen Druckmitteldurchlass aufnimmt, so dass durch die Anordnung und Ausführung der beiden Druckmitteldurchlässe der Strömungsverlauf vorbestimmt ist.

Daher ist es die Aufgabe der vorliegenden Erfindung, die Durchströmung für eine Ventilanordnung der eingangs genannten Art zu verbessern, um insbesondere einen möglichst geringen Staudruck am Kugelrückschlagventil und eine reduzierte Beanspruchung der Abstützflächen für das Kugelrückschlagventil zu erzielen, wobei unter Berücksichtigung der genannten Kriterien ein möglichst großer Durchlass im Bereich des Kugelrückschlagventils gewährleistet werden soll.

Diese Aufgabe wird für eine Ventilanordnung der angegebenen Art erfindungsgemäß durch die den Patentanspruch 1 kennzeichnenden Merkmale gelöst.

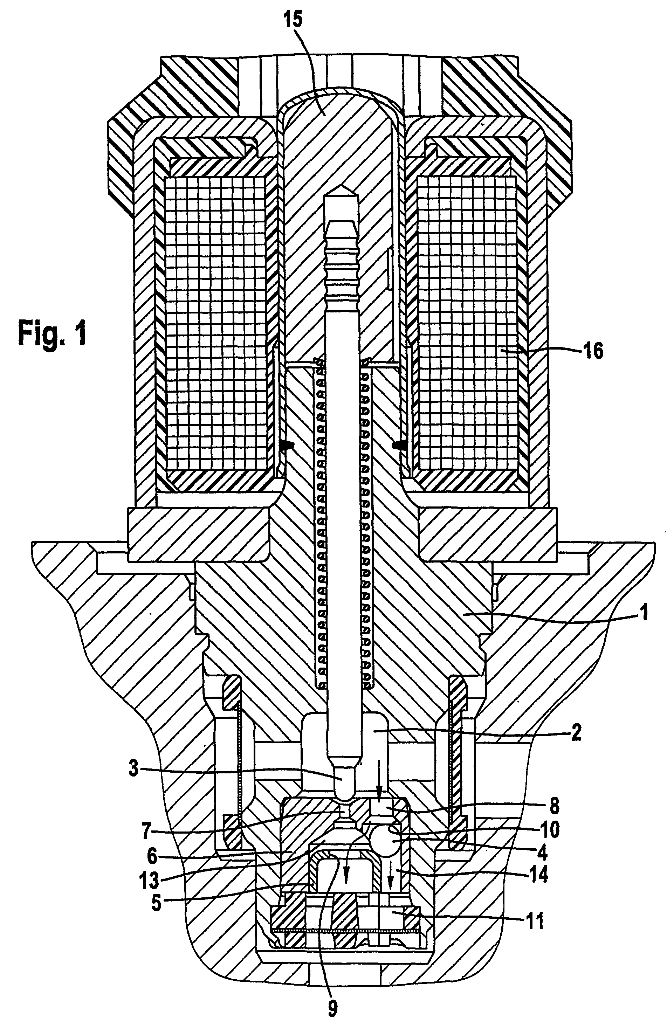

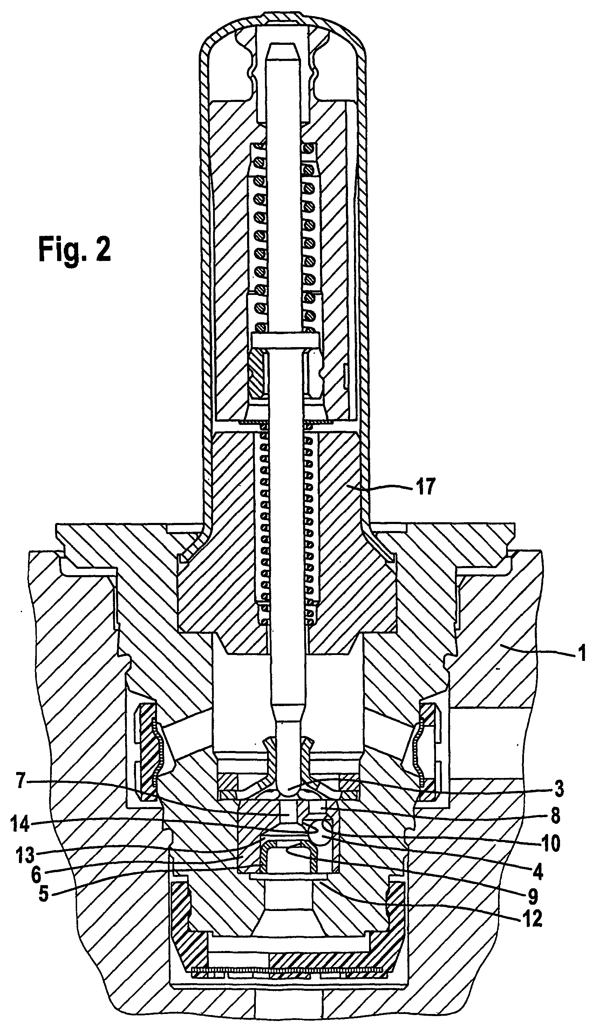

Weitere Merkmale, Vorteile und Anwendungsmöglichkeiten der Erfindung werden im folgenden anhand der Beschreibung zweier Ausführungsbeispiele gemäß den Fig. 1 und 2 erläutert.

Es zeigen:
- Fig. 1: die Gesamtansicht einer Ventilanordnung im Querschnitt, mit einem von unten in die Öffnung des Ventilgehäuses eingesetzten zweiteiligen Ventilaufnahmekörper,
- Fig. 2: die Gesamtansicht einer Ventilanordnung im Querschnitt, mit einem von oben in die Öffnung des Ventilgehäuses eingesetzten zweiteiligen Ventilaufnahmekörper, mit einem geeigneten Vorsprung am Ventilgehäuse zur Sicherung des Ventilschließgliedes im Ventilaufnahmekörper gegen ein Herausfallen.

In erheblich vergrößerter Darstellung ist in Fig. 1 eine Ventilanordnung zur Verwendung für eine schlupfgeregelte Kraftfahrzeug-Bremsanlage gezeigt, mit einem ersten Ventilschließglied 4, das als hydraulisch ansteuerbares Kugelrückschlagventil ausgebildet ist, sowie mit einem weiteren, mittels eines Magnetankers 15 und einer Magnetspule 16 steuerbaren Ventilschließglied 3, das ebenso wie das erste Ventilschließglied 4 in einer Ventilaufnahmebohrung 2 des Ventilgehäuses 1 angeordnet ist. Beide Ventilschließglieder 3,4 im Ventilgehäuse 1 sind somit wirkungsmäßig unabhängig voneinander schaltbar. Das hydraulisch betätigbare Kugelrückschlagventil ist Bestandteil einer aus einem ersten sowie einem zweiten Ventilaufnahmekörper 5, 6 gebildeten Baueinheit, die mit einem mittig im zweiten Ventilaufnahmekörper 6 angeordneten ersten Druckmitteldurchlass 7 versehen ist, der mittels des zweiten Ventilschließgliedes 3 verschließbar ist. Neben dem ersten Druckmitteldurchlass 7 befindet sich im zweiten Ventilaufnahmekörper 6 ein weiterer, zweiter Druckmitteldurchlass 8, der durch das bereits eingangs beschriebene erste Ventilschließglied 4 verschließ- als auch freigebbar ist. Der Außendurchmesser des ersten Ventilaufnahmekörpers 5 ist an den Innendurchmesser des zweiten Ventilaufnahmekörpers 6 derart angepasst, dass der erste Ventilaufnahmekörper 5 spielfrei, vorzugsweise mittels einer Pressverbindung in den zweiten Ventilaufnahmekörper 6 eingefügt ist, so dass sich das erste Ventilschließglied 4 an einer Bohrungsstufe 10 im zweiten Druckmitteldurchlass 8 oder am ersten Ventilaufnahmekörper 5 abstützen kann. Der zweite Druckmitteldurchlass 8 verzweigt sich entsprechend der Pfeildarstellung entlang der Außenfläche des ersten Ventilaufnahmekörpers 5 in Richtung dessen Stirn- und Mantelfläche, so dass Druckmittel im geöffneten Zustand des Ventilschließgliedes 4 im Druckmitteldurchlass 8 teilweise durch eine Öffnung 9 in der Stirnfläche des Ventilaufnahmekörpers 5 und teilweise entlang der den zweiten Druckmitteldurchlass 8 begrenzenden Mantelfläche des ersten Ventilaufnahmekörpers 5 strömt. Der erste Ventilaufnahmekörper 5 besteht aus einer zu einem Topf geformten Hülse, die aus Bandstahl im Tiefziehverfahren hergestellt und anschließend im Bereich der vom ersten Ventilschließglied 4 beaufschlagten Fläche gehärtet ist. Der zweite Ventilaufnahmekörper 6 besteht hingegen aus einem massiven, vorzugsweise metallischen Drehteil, dessen mittig darin angeordneter erster Druckmitteldurchlass 7 als trichterförmig nach unten erweiterte Stufenbohrung ausgeführt ist, deren erster Stufenabschnitt 13 in den erweiterten zweiten Stufenabschnitt 14 des parallel zum ersten Druckmitteldurchlass 7 angeordneten zweiten Druckmitteldurchlass 8 übergeht, so dass eine Druckmittelverbindung beider Druckmitteldurchlässe 7,8 zustande kommt. Zur Aufnahme und Funktion des ersten Ventilschließgliedes 4 zwischen den beiden Ventilaufnahmekörpern 5,6 als auch zur internen Kanalverzweigung zwischen dem ersten und zweiten Druckmitteldurchlass 7, 8 ist die Tiefe des zweiten Stufenabschnitts 14 größer als die Tiefe des ersten Stufenabschnitts 13 gewählt. Besonders bewährt hat sich für das erste Ventilschließglied 4 die Verwendung einer Stahlkugel, die in den erweiterten zweiten Stufenabschnitt 14 eingelegt und von der mechanisch steifen Rundung des in den ersten Stufenabschnitt 13 eingefügten ersten Ventilaufnahmekörper 5 im zweiten Ventilaufnahmekörper 6 sicher positioniert ist. Der erste Ventilaufnahmekörper 5 ist von einem in die Ventilaufnahmebohrung von unten eingesetzten Plattenfilter 11 zusätzlich gesichert, so dass ein Herausfallen des ersten Ventilaufnahmekörpers 5 und des ersten Ventilschließgliedes 4 aus der Ventilanordnung vermieden ist.

In der gewählten Darstellung nach Fig. 1 handelt es sich um ein in Grundstellung stromlos offen geschaltetes Elektromagnetventil, dessen Ventilgehäuse 1 beispielhaft in Patronenbauweise ausgeführt und in einem blockförmigen Träger einer schlupfgeregelten Bremsanlage verstemmt ist.

Die Fig. 2 zeigt abweichend von dem vorangegangenen Ausführungsbeispiel ein gleichfalls stromlos in Grundstellung offen geschaltetes Elektromagnetventil, in das zusätzlich eine Überdruckventilfunktion integriert ist, die durch ein federbelastetes Ventilschließglied 3 realisiert wird, das sich abhängig von einem definierten hydraulischen Öffnungsdruck relativ zur Position des Magnetankers bewegen kann, um bei Bedarf losgelöst von der elektromagnetischen Erregung des Magnetankers 15 den ersten Druckmitteldurchlass 7 im zweiten Ventilaufnahmekörper 6 freizugeben. Der Aufbau der aus dem ersten und zweiten Ventilaufnahmekörper 5, 6 und dem darin integrierten ersten Ventilschließglied 4, als auch die Anordnung der Druckmitteldurchlässe 7, 8, entsprechen grundsätzlich dem eingangs erwähnten Ausführungsbeispiel nach Fig. 1.

Als wesentlicher Unterschied hingegen weist die Ventilanordnung nach Fig. 2 jedoch eine sowohl gegenüber Fig. 1 umgekehrte Montagerichtung als auch Fixierung des zweiten Ventilaufnahmekörpers 6 in der Ventilaufnahmebohrung 2 auf, wozu sich dieser an einer Stufe des Ventilgehäuses 1 abstützt. In einem Axialabstand zu den unteren Stirnflächen beider Ventilaufnahmekörper 5, 6 befindet sich unterhalb der Ventilgehäusestufe ein Vorsprung 12 am Ventilgehäuse 1, der den ersten Ventilaufnahmekörper 5 so weit überdeckt, dass-bei einem unbeabsichtigten Lösen des ersten Ventilaufnahmekörpers 5 dieser nur um den kleinen Axialabstand nach unten aus dem zweiten Ventilaufnahmekörper 6 herausrutschen kann, so dass die Funktionssicherheit des zwischen den beiden Ventilaufnahmekörpern 5,6 angeordneten ersten Ventilschließgliedes 4 immer gewährleistet bleibt. In solch einem Zustand wäre eine hinreichende Strömungsverbindung mit dem zweiten Druckmitteldurchlaß 8 über die Öffnung 9 gewährleistet, während der zweite Druckmitteldurchlass 8 unterhalb des Kugelrückschlagventils infolge des abgesenkten ersten Ventilaufnahmekörpers 5 in Richtung des Plattenfilters 11 ausnahmsweise versperrt wäre.

Grundsätzlich bewegt sich das kugelförmige Ventilschließglied 4 immer in Abhängigkeit eines hydraulischen Differenzdrucks entweder im Schließsinn nach oben gegen die als Kegeldichtsitz wirksame Bohrungsstufe 10 oder im Öffnungssinn nach unten gegen die gewölbte Schulter des topfförmigen Ventilaufnahmekörpers 5, wodurch das Ventilschließglied 4 infolge der großzügigen Öffnungsquerschnitte in den Stufenabschnitt 13, 14 verlustarm umströmt werden kann.

Die anhand den Fig. 1 und 2 vorgestellte Ventilanordnung hat den Vorteil, dass der Druckmittelstrom über das erste Ventilschließglied 4 nicht nur in Richtung des ersten und zweiten Stufenabschnitts 13,14 sinnvollerweise verzweigt wird, sondern auch gleichzeitig bei geringstem Staudruck ein größerer Durchflussquerschnitt im Bereich des umströmten Kugelrückschlagventils geschaffen wird, so dass beispielhaft bei dem nach Fig. 2 geschilderten Überdruckventil der Ventilsitz im Ventilaufnahmekörper 6, der das Ventilschließglied 3 trägt, verkleinert werden kann.

Dies führt ferner zu dem Vorteil, dass die Kraft der zwischen dem Magnetanker 15 und dem Stößelabschnitt am Ventilschließglied 3 angeordneten Feder erheblich reduziert werden kann, so dass sich zwangsläufig auch die Belastung des dem ersten Druckmitteldurchlass 7 zugeordneten Ventilsitzes verringert, was wiederum zu einem reduzierten Verschleiß des Ventilsitzes führt.

Auch die Beanspruchung der den Magnetanker 15 umschließenden Ventilhülse beim Auftreffen des Magnetankers 15 auf den Ventilhülsendom verringert sich erheblich, da nunmehr auch die zwischen dem Magnetanker 15 und dem Magnetkern 17 eingespannte Rückstellfeder schwächer ausgelegt werden kann, so dass der Auftreffimpuls an der Ventilhülse nach Abbruch der elektromagnetischen Erregung minimiert ist.

Einen weiteren, erheblichen Beitrag zur Minimierung der Kantenbeanspruchung in den Ventilaufnahmekörpern 1, 2 ergibt sich durch die topfförmig nach oben gewölbte steife Stützkontur zwischen dem Topfboden und dem Topfrand, an der sich das erste Ventilschließglied 4 abstützt, da in vorliegender Ausführungsform das Kugelrückschlagventil jeweils auf den festigkeitsmäßig günstigen Wölbungsbereich am ersten Ventilaufnahmekörper 5 anschlägt. Verschleiß in Form von Kantenabnutzung wird folglich durch die Geometrie des ersten Ventilaufnahmekörpers 5 effizient verhindert.

Ein weiterer Vorteil ergibt sich durch die Tatsache, dass durch die dezentrale Anordnung des ersten Ventilschließgliedes 4 im zweiten Stufenabschnitt 14 jeweils vom Kugelrückschlagventil eine asymetrische Belastung auf den ersten Ventilaufnahmekörper 5 ausgeübt wird, die allenfalls zu einem zusätzlichen vorteilhaften Verklemmen des ersten Ventilaufnahmekörpers 5 im zweiten Ventilaufnahmekörper 6 führt, so dass im Betrieb des Kugelrückschlagventils die Einpresskraft am Ventilaufnahmekörper 5 von einer Klemmkraft zusätzlich überlagert wird, die eine weitere Sicherheit gegenüber einem Lösevorgang des ersten Ventilaufnahmekörpers 5 aus dem zweiten Ventilaufnahmekörper 6 darstellt.

### Bezugszeichenliste

- 1: Ventilgehäuse
- 2: Ventilaufnahmebohrung
- 3: Zweites Ventilschließglied
- 4: Erstes Ventilschließglied
- 5: Erster Ventilaufnahmekörper
- 6: Zweiter Ventilaufnahmekörper
- 7: Erster Druckmitteldurchlass
- 8: Zweiter Druckmitteldurchlass
- 9: Öffnung
- 10: Bohrungsstufe
- 11: Plattenfilter
- 12: Vorsprung
- 13: Erster Stufenabschnitt
- 14: Zweiter Stufenabschnitt
- 15: Magnetanker
- 16: Magnetspule
- 17: Magnetkern

## Patentansprüche

1. Ventilanordnung, insbesondere für schlupfgeregelte Kraftfahrzeug-Bremsanlagen, mit einem ersten Ventilschließglied (4), das als hydraulisch ansteuerbares Rückschlagventil ausgebildet ist, sowie mit einem weiteren mittels Magnetanker und Magnetspule elektromagnetisch steuerbaren Ventilschließglied (3), das in einer das erste Ventilschließglied (4) aufweisenden Ventilaufnahmebohrung des die Ventilanordnung aufnehmenden Ventilgehäuses (1) angeordnet ist, wobei beide Ventilschließglieder (3, 4) im Ventilgehäuse (1) wirkungsmäßig unabhängig voneinander schaltbar sind, mit einem ersten sowie einem zweiten zu einer Baueinheit zusammengefassten Ventilaufnahmekörper (5, 6), mit einem ersten, mittigen Druckmitteldurchlass (7) im zweiten Ventilaufnahmekörper (6), der mittels des zweiten Ventilschließgliedes (3) verschließbar ist und mit einem neben dem ersten Druckmitteldurchlass (7) im zweiten Ventilaufnahmekörper (6) angeordneten zweiten Druckmitteldurchlass (8), der durch das erste Ventilschließglied (4) verschließbar ist, wobei der Außendurchmesser des ersten Ventilaufnahmekörpers (5) an den Innendurchmesser des zweiten Ventilaufnahmekörpers (6) derart angepasst ist, dass der erste Ventilaufnahmekörper (5) spielfrei im zweiten Ventilaufnahmekörper (6) so weit eingefügt ist, dass sich das erste Ventilschließglied (4) entweder an einer Bohrungsstufe (10) im zweiten Druckmitteldurchlass (8) oder am ersten Ventilaufnahmekörper (5) abstützt, **dadurch gekennzeichnet, dass** der erste Druckmitteldurchlass (7) als trichterförmig nach unten erweiterte Stufenbohrung ausgeführt ist, deren erster Stufenabschnitt (13) in einen erweiterten zweiten Stufenabschnitt (14) des parallel zum ersten Druckmitteldurchlass (7) angeordneten zweiten Druckmitteldurchlasses (8) derart in Form einer Überschneidung übergeht, dass eine Druckmittelverbindung beider Druckmitteldurchlässe (7,8) mit einem vergrößerten Durchflussquerschnitt gebildet ist.

2. Ventilanordnung nach Anspruch 1, **dadurch gekennzeichnet, dass** der zweite Druckmitteldurchlass (8) entlang der Außenfläche des ersten Ventilaufnahmekörpers (5) in Richtung der Stirn- und Mantelfläche des ersten Ventilaufnahmekörpers (5) derart verzweigt ist, dass Druckmittel im Druckmitteldurchlass (8) teilweise durch eine zentrale Öffnung (9) im ersten Ventilaufnahmekörper (5) und teilweise entlang einem den zweiten Druckmitteldurchlass (8) begrenzenden dezentralen Wandabschnitt des ersten Ventilaufnahmekörpers (5) geführt ist.

3. Ventilanordnung nach Anspruch 1 oder 2, **dadurch gekennzeichnet, dass** der erste Ventilaufnahmekörper (5) aus einer zu einem Topf geformten Hülse besteht, die vorzugsweise aus Bandstahl im Tiefziehverfahren hergestellt ist.

4. Ventilanordnung nach Anspruch 1, **dadurch gekennzeichnet, dass** der zweite Ventilaufnahmekörper (6) aus einem vorzugsweise metallischen Drehteil besteht, dessen mittiger erster Druckmitteldurchlass (7) mit seinem erweiterten erster Stufenabschnitt (13) den erweiterten zweiten Stufenabschnitt (14) des zweiten Druckmitteldurchlasses (8) überschneidet.

5. Ventilanordnung nach Anspruch 4, **dadurch gekennzeich** **net, dass** zur Aufnahme des ersten Ventilschließgliedes (4) und zur internen Druckmittelverzweigung des ersten mit dem zweiten Druckmitteldurchlass (7,8) die Tiefe des zweiten Stufenabschnitts (14) größer als die Tiefe des ersten Stufenabschnitts (13) gewählt ist.

6. Ventilanordnung nach einem der vorhergehenden Ansprüche, **dadurch gekennzeichnet, dass** das erste Ventilschließglied (4) vorzugsweise eine Stahlkugel ist, die in den erweiterten zweiten Stufenabschnitt (14) des zweiten Ventilaufnahmekörpers (6) eingelegt und vom in den ersten Stufenabschnitt (13) eingefügten ersten Ventilaufnahmekörper (5) im zweiten Ventilaufnahmekörper (6) gehalten ist.

7. Ventilanordnung nach einem der vorhergehenden Ansprüche, **dadurch gekennzeichnet, dass** der erste Ventilaufnahmekörper (5) als Fixiersicherung im zweiten Ventilaufnahmekörper (6) von einem Vorsprung (12) des Ventilgehäuses (1) oder von einem im Ventilgehäuse (1) angeordneten Plattenfilter (12) überdeckt ist.

## Claims

1. Valve assembly, in particular for slip-controlled automotive vehicle brake systems, including a first valve closure member (4) that is configured as a hydraulically actuatable non-return valve, as well as a second valve closure member (3) controllable electromagnetically by means of a magnet armature and a magnet coil, said second valve closure member being arranged in a valve accommodating bore including the first valve closure member (4) and disposed in the valve housing (1) in which the valve assembly is received, wherein both valve closure members (3, 4) in the valve housing (1) are controllable irrespective of one another in terms of effect, including a first and a second valve accommodating member (5, 6) grouped in a construction unit, having a first centric pressure fluid passage (7) in the second valve accommodating member (6) that is closable by means of the second valve closure member (3), and including a second pressure fluid passage (8) that is adjacent to the first pressure fluid passage (7) in the second valve accommodating member (6) and closable by the first valve closure member (4), with the outside diameter of the first valve accommodating member (5) being conformed to the inside diameter of the second valve accommodating member (6) in such a way that the first valve accommodating member (5) is inserted without clearance so far into the second valve accommodating member (6) that the first valve closure member (4) is supported either on a bore step (10) in the second pressure fluid passage (8) or on the first valve accommodating member (5),
**characterized in that** the first pressure fluid passage (7) is configured as a stepped bore being funnel-like expanded in a downward direction, the first stepped portion (13) thereof passing over into an expanded second stepped portion (14) of the second pressure fluid passage (8) that is arranged in parallel to the first pressure fluid passage (7) in the form of an intersection in such a fashion that a pressure fluid connection of both pressure fluid passages (7, 8) with an enlarged flow cross-section is produced.

2. Valve assembly as claimed in claim 1,
**characterized in that** the second pressure fluid passage (8) forms branches along the external surface of the first valve accommodating member (5) in the direction of the frontal and peripheral surface of the first valve accommodating member (5) in order to conduct pressure fluid in the pressure fluid passage (8), partly through a central opening (9) in the first valve accommodating member (5) and partly along a decentralized wall portion of the first valve accommodating member (5) that defines the second pressure fluid passage (8).

3. Valve assembly as claimed in claim 1 or 2,
**characterized in that** the first valve accommodating member (5) is composed of a sleeve shaped like a bowl, which is preferably deepdrawn from band steel.

4. Valve assembly as claimed in claim 1,
**characterized in that** the second valve accommodating member (6) is a preferably turned metal part whose centric first pressure fluid passage (7) with its expanded first stepped portion (13) cuts across the expanded second stepped portion (14) of the second pressure fluid passage (8).

5. Valve assembly as claimed in claim 4,
**characterized in that** the depth of the second stepped portion (14) is chosen to be in excess of the depth of the first stepped portion (13) for the accommodation of the first valve closure member (4) and for the internal pressure fluid branching of the first and the second pressure fluid passage (7, 8).

6. Valve assembly as claimed in any one of the preceding claims,
**characterized in that** the first valve closure member (4) is preferably a steel ball that is inserted into the expanded second stepped portion (14) of the second valve accommodating member (6) and retained in the second valve accommodating member (6) by the first valve accommodating member (5) inserted into the first stepped portion (13).

7. Valve assembly as claimed in any one of the preceding claims,
**characterized in that** the first valve accommodating member (5) as a fixing mechanism in the second valve accommodating member (6) is covered by a projection (12) of the valve housing (1) or by a plate-type filter (11) that is arranged in the valve housing (1).

## Revendications

1. Dispositif de soupape, notamment pour des installations de freinage de véhicule automobile à régulation de patinage, comportant un premier élément de fermeture de soupape (4), qui est agencé sous la forme d'une soupape antiretour commandable par voie hydraulique, ainsi qu'un élément de fermeture de soupape (3), qui est commandable par voie électromagnétique au moyen d'une armature magnétique et d'une bobine magnétique et qui est disposé dans un perçage de réception de soupape, qui comporte le premier élément de fermeture de soupape (4), du boîtier de soupape (1) logeant le dispositif de soupape, les deux éléments de fermeture de soupape (3,4) pouvant être commutés selon des actions indépendantes l'une de l'autre dans le boîtier de soupape (1), et comportant un premier et un second corps de réception de soupape (5,6), qui sont réunis pour former une unité de construction, un premier passage médian (7) pour un fluide sous pression situé dans le second corps de réception de soupape (6) et qui peut être formé au moyen du second élément de fermeture de soupape (3) et un second passage (8) pour le fluide sous pression, qui est disposé à côté du premier passage (7) pour fluide sous pression dans le second corps de réception de soupape (6) et peut être formé par le premier élément de fermeture de soupape (4), et dans lequel le diamètre extérieur du premier corps de réception de soupape (5) est adapté au diamètre intérieur du second corps de réception de soupape (6) de telle sorte que le premier corps de réception de soupape (5) est inséré sans jeu dans le second corps de réception de soupape (6) de telle sorte que le premier élément de fermeture de soupape (4) prend appui soit sur une partie étagée (10) de perçage dans le second passage (8) pour le fluide sous pression ou dans le second corps de réception de soupape (5), **caractérisé en ce que** le premier passage (7) pour le fluide sous pression est agencé sous la forme d'un perçage étagé qui s'élargit vers le bas sous la forme d'un entonnoir et dont la première section étagée (13) se prolonge par une seconde section étagée élargie (14) du second passage (8) pour fluide sous pression, qui est disposé en parallèle avec le premier passage (7) pour le fluide sous pression, et ce sous la forme d'une intersection de telle sorte qu'une liaison pour le fluide sous pression des deux passages (7,8) pour le fluide sous pression est formée avec une section transversale accrue de passage.

2. Dispositif de soupape selon la revendication 1, **caractérisé en ce que** le second passage (8) pour le fluide sous pression est ramifié le long de la surface extérieure du second corps de réception de soupape (5) en direction de la surface frontale et de la surface enveloppe du second corps de réception de soupape (5), de telle sorte que le fluide sous pression dans le passage (8) pour le fluide sous pression est guidé partiellement par une ouverture centrale (9) dans le premier corps de réception de soupape (5) et partiellement le long d'une section de paroi décentralisée, limitée par le second passage (8) pour le fluide sous pression, du premier corps de réception de soupape (5).

3. Dispositif de soupape selon la revendication 1 ou 2, **caractérisé en ce que** le premier corps de réception de soupape (5) est constitué par une douille, qui est agencée en forme de pot et qui est formée de préférence à partir d'acier en bande au moyen d'un procédé d'emboutissage.

4. Dispositif de soupape selon la revendication 1, **caractérisé en ce que** le second corps de réception de soupape (6) est constitué par une partie rotative de préférence métallique, dont le premier passage central (7) pour le fluide sous pression croise une première section étagée élargie (13) la seconde section étagée élargie (14) du second passage (8) pour le fluide sous pression.

5. Dispositif de soupape selon la revendication 4, **caractérisé en ce que** pour la réception du premier élément de fermeture de soupape (4) et pour la ramification interne du fluide sous pression du premier passage (7,8) pour le fluide sous pression avec le second passage (7,8) pour le fluide sous pression, la profondeur de la seconde section étagée (14) est choisie supérieure à la profondeur de la première section étagée (13).

6. Dispositif de soupape selon l'une des revendications précédentes, **caractérisé en ce que** le premier élément de fermeture de soupape (4) est de préférence une bille d'acier, qui est insérée dans la seconde section étagée élargie (14) du second corps de réception de soupape (6) et est retenue par le premier corps de réception de soupape (5), inséré dans la seconde section étagée (13), dans le second corps de réception de soupape (6).

7. Dispositif de soupape selon l'une des revendications précédentes, **caractérisé en ce que** le premier corps de réception de soupape (5) est recouvert, en tant que système de sécurité de fixation, dans le second corps de réception de soupape (6), par une partie saillante (12) du boîtier de soupape (1) ou par un filtre à plaques (12) disposé dans le boîtier de soupape (1).
